# EUROPÄISCHE PATENTSCHRIFT

(11) **EP 3 931 949 B1**
(45) Veröffentlichungstag und Bekanntmachung des Hinweises auf die Patenterteilung: **16.07.2025**
(21) Anmeldenummer: 20701323.6
(22) Anmeldetag: 21.01.2020
(51) Int. Cl.: H02K 7/02, H02K 9/06, H02K 7/14

(54) **BÜRSTENLOSER GLEICHSTROMMOTOR EINER HANDWERKZEUGMASCHINE**
BRUSHLESS DIRECT CURRENT MOTOR OF A HAND-HELD POWER TOOL
MOTEUR À COURANT CONTINU SANS BALAIS D'UNE MACHINE-OUTIL PORTATIVE

(30) Priorität: 25.02.2019 DE 102019202516; 08.03.2019 DE 102019203180
(43) Veröffentlichungstag der Anmeldung: 05.01.2022
(73) Patentinhaber: Robert Bosch GmbH, 70442 Stuttgart (DE)
(72) Erfinder: HEIZMANN, Joachim, 78194 Immendingen (DE); VOELKLE, Andreas, 70794 Filderstadt (DE); LABER, Sebastian, 71144 Steinenbronn (DE)
(86) Internationale Anmeldenummer: PCT/EP2020/051353
(87) Internationale Veröffentlichungsnummer: WO 2020/173618

(56) Entgegenhaltungen:
- EP-A2- 3 035 508
- CN-U- 206 673 729
- JP-U- S5 316 114
- US-A- 3 906 266
- US-A- 5 375 637

## Beschreibung

### Stand der Technik

Die Erfindung betrifft einen bürstenlosen Gleichstrommotor - auch BLDC-(brushless direct current) oder EC-Motor (electronically commutated) genannt - eines elektrischen Bearbeitungsgeräts nach dem Oberbegriff des unabhängigen Anspruchs 1. Der bürstenlose Gleichstrommotor weist einen Stator, einen Rotor, einen Lüfter und eine Schwungscheibe auf, wobei der Rotor, der Lüfter und die Schwungscheibe drehfest auf einer Motorwelle des bürstenlosen Gleichstrommotors angeordnet sind und wobei die Schwungscheibe axial entlang der Motorwelle zumindest teilweise von dem Lüfter umschlossen ist. Die Erfindung betrifft weiterhin eine Elektrowerkzeugmaschine mit einem bürstenlosen Gleichstrommotor.

Rotoren von bürstenlosen Gleichstrommotoren haben konstruktionsbedingt ein sehr geringes Massenträgheitsmoment. Im Vergleich zu einem bürstenbehafteten DC-Motor befinden sich keine Wicklungen auf dem Rotor. Zudem ist der Rotordurchmesser eines bürstenlosen Gleichstrommotors in der Regel im Vergleich zu dem eines bürstenbehafteten Gleichstrommotors reduziert. Dies führt dazu, dass die im Leerlauf gespeicherte Rotationsenergie eines BLDC-Motors um mindestens eine Größenordnung geringer ist. Bei der Anwendung vieler elektrischer Bearbeitungsgeräte, insbesondere Elektrowerkzeugmaschinen, kann eine hohe gespeicherte Rotationsenergie jedoch sehr vorteilhaft sein, um die Bearbeitungsvorgänge komfortabler und effizienter zu gestalten.

Die DE 10 2012 216 496 A1 zeigt eine Handwerkzeugmaschine, insbesondere einen Bohrhammer, Bohrschrauber oder Drehschlagschrauber, mit einem elektronisch kommutierten Antriebsmotor. Der Antriebsmotor ist mit einem scheibenförmigen Rotor und einem Stator versehen. Am Rotor ist ein Schwungrad ausgebildet, das gemäß einer Ausführungsform als eine zumindest abschnittsweise scheibenförmige Schwungmasse ausgebildet ist. Auf einer Motorwelle des bürstenlosen Gleichstrommotors bzw. an der Schwungmasse ist ein optionales Lüfterrad zur Kühlung vorgesehen. Das Lüfterrad kann z.B. ein aus einem Kunststoffmaterial im Spritzgussverfahren hergestelltes oder ein aus einem Metallblech in Stanzbiegetechnik gefertigtes Bauteil sein, das mit der Schwungmasse verklebt und/oder stoffschlüssig verbunden ist.

Aus der EP 2 845 689 A2 ist eine Elektrowerkzeugmaschine bekannt, in welcher ein Schwungrad durch eine Antriebseinheit angetrieben werden kann, um einem Werkzeugkörper durch einen Kraftübertragungsabschnitt des Schwungrads kinetische Energie zuzuführen. Weiterhin ist eine Belüftungseinheit derart angebracht, dass sie mit dem Schwungrad zusammen eine Kühlluft erzeugt.

Weitere Beispiele für Lüfter- und Schwungradkonfigutionen bürstenloser und bürstenbehafteter Elektromotoren gehen aus der EP 3 035 508 A2, der CN 206 673 729 U, der US 3 906 266 A, der US 5 375 637 A und der JP S53 16114 U hervor.

Es ist Aufgabe der Erfindung, gegenüber dem Stand der Technik einen bürstenlosen Gleichstrommotor für ein elektrisches Bearbeitungsgerät bereitzustellen, der trotz seines verhältnismäßig geringen Gewichts und seiner hohen Leistungsdichte den Anforderungen an ein hohes Massenträgheitsmoment bei gleichzeitig ausreichender Kühlung und kompakter Baugröße des elektrischen Bearbeitungsgeräts gerecht wird.

### Vorteile der Erfindung

Zur Lösung der gestellten Aufgabe ist vorgesehen, dass die Schwungscheibe an einem axialen Ende eine an ihrem radial äußeren Umfang umlaufende Nut aufweist, in die ein radial nach innen vorstehender Kragen des Lüfters eingreift.

Auf diese Weise ist eine besonders kurze Bauform in Verbindung mit einem hohen Maximalmoment des BLDC-Motors und einem sicheren axialen Sitz des Lüfter auf der Schwungscheibe möglich. Gleichzeitig ist die vorgeschlagene Lösung im Betrieb sehr robust und zuverlässig.

Als elektrisches Bearbeitungsgerät sollen im Kontext der Erfindung unter anderem akku- oder netzbetriebene Elektrowerkzeugmaschinen zur Bearbeitung von Werkstücken mittels eines elektrisch angetriebenen Einsatzwerkzeugs verstanden werden. Dabei kann das elektrische Bearbeitungsgerät sowohl als Elektrohandwerkzeug als auch als stationäre Elektrowerkzeugmaschine ausgebildet sein. Typische Elektrowerkzeugmaschinen sind in diesem Zusammenhang Hand- oder Standbohrmaschinen, Schrauber, Schlagbohrmaschinen, Hobel, Winkelschleifer, Schwingschleifer, Poliermaschinen oder dergleichen. Als elektrische Bearbeitungsgeräte kommen aber auch Motor getriebene Gartengeräte wie Rasenmäher, Rasentrimmer, Astsägen oder dergleichen in Frage. Weiterhin ist die Erfindung auf bürstenlose Gleichstrommotoren von Haushaltgeräten, wie Staubsauger, Mixer, etc. anwendbar.

In einer weiteren Ausgestaltung der Erfindung weist die Schwungscheibe eine sehr hohe Massenträgheit, eine sehr hohe Wellenpressung und eine sehr hohe homogene Dichte auf. Dadurch ist die vorgeschlagene Lösung einfach und kostengünstig ohne Wuchten herzustellen. Zudem ist ein sehr guter Form- und/oder Stoffschluss mit der Motorwelle gewährleistet. Mit besonderem Vorteil ist die Schwungscheibe einstückig aus Messing oder aus Eisen gefertigt. Messing ist als Material besonders gut für die Herstellung einer schnell drehenden Schwungscheibe geeignet, da seine Dichte von typ. 8.5 g/cm³ eine sehr hohe Massenträgheit bei kleiner Baugröße bewirkt und das Elastizitätsmodul von Messing von bis zu 120 GPa eine sehr hohe Wellenpressung erlaubt. Dies verhindert zuverlässig ein potentielles Durchdrehen der Scheibe im Betrieb. Durch die hohe homogene Dichte von Messing kann die Schwungscheibe ohne einen aufwändigen und teuren Wuchtprozess direkt verbaut werden. Der Baueinheit aus Rotor, Lüfter und Schwungscheibe kann somit die Anforderungen an die maximal zulässige Rotorunwucht ohne zusätzliche Bearbeitungsprozesse erfüllen. Entsprechende Vorteile ergeben sich bei der Verwendung von Eisen statt Messing. Es ist aber auch denkbar, die Schwungscheibe aus Keramik, Kunststein oder anderen Materialien, insbesondere Kunststoffen, zu fertigen, die vergleichbare Eigenschaften aufweisen, wie die oben genannten von Messing.

In einer weiteren Ausgestaltung geht die Schwungscheibe zumindest einseitig in radialer Richtung der Motorwelle bündig in den Lüfter über. Auf diese Weise ist es möglich, ungünstige Geräusche, die beim Betrieb des BLDC-Motors bzw. des elektrischen Bearbeitungsgeräts entstehen könnten, wirksam zu vermeiden. Zusätzlich wird die zur Verfügung stehende Querschnittfläche für den Kühlluftstrom des Motors nicht eingeengt.

Weiterhin ist vorgesehen, dass in radialer Richtung der Motorwelle eine äußere Kontur der Schwungscheibe über mindestens 50 % ihrer axialen Erstreckung entlang der Motorwelle im Wesentlichen einer äußeren Kontur des Lüfters entspricht. Auf diese Weise kann ein einfaches und kostengünstiges Umspritzen der Schwungscheibe mit dem Lüfter bei gleichzeitig gutem Form- und/oder Stoffschluss realisiert werden. Weiterhin ist es vorteilhaft, wenn die Schwungscheibe über mindestens 50 % ihrer axialen Erstreckung entlang der Motorwelle verjüngend, insbesondre konisch, zuläuft. Dies ermöglicht einerseits ein einfacheres Umspritzen der Schwungscheibe von einer Seite, andererseits aber auch ein einfacheres Aufschieben des Lüfters auf die Schwungscheibe bzw. ein einfacheres Einschieben der Schwungscheibe in den Lüfter. Unterstützt werden kann dies dadurch, dass die Schwungscheibe zumindest einseitig eine konvexe Form aufweist, die dem Verlauf bzw. der Form des Kühlluftstroms des Motors angenähert ist.

Zudem betrifft die Erfindung eine Handwerkzeugmaschine mit einem erfindungsgemäßen, bürstenlosen Gleichstrommotor.

### Ausführungsbeispiele

### Zeichnung

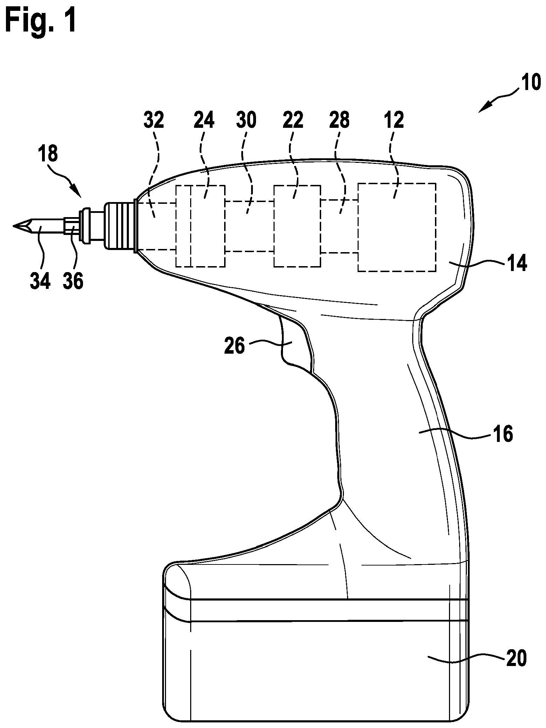

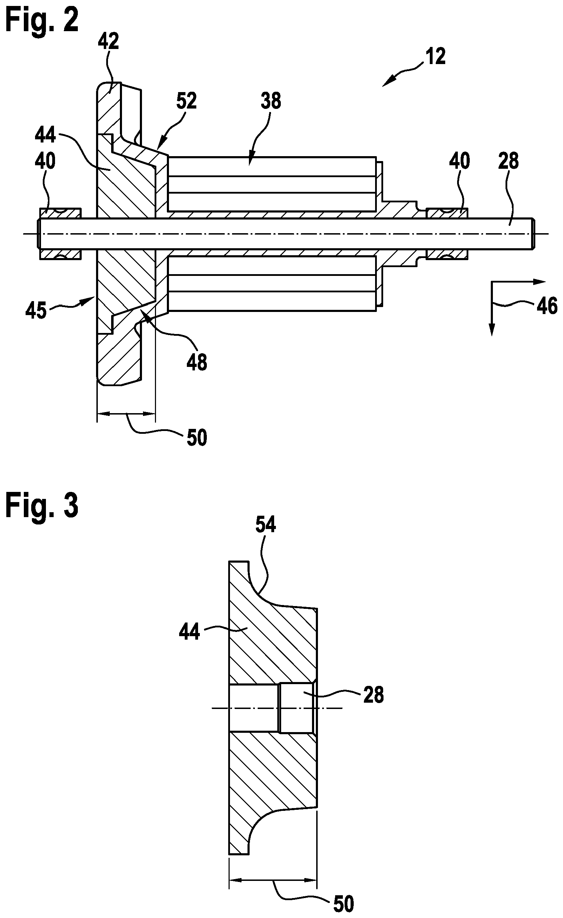

Die Erfindung wird im Folgenden anhand der Figuren 1 und 2 beispielhaft erläutert, wobei gleiche Bezugszeichen in den Figuren auf gleiche Bestandteile mit einer gleichen Funktionsweise hindeuten.

Es zeigen
- Fig. 1:: eine schematische Darstellung eines als Handwerkzeugmaschine ausgebildeten elektrischen Bearbeitungsgeräts mit einem bürstenlosen bzw. elektronisch kommutierten Gleichstrommotor,
- Fig. 2:: eine schematische Darstellung eines erfindungsgemäßen BLDC- bzw. EC-Motors mit einer Schwungscheibe in einem ersten Ausführungsbeispiel,
- Fig. 3:: eine schematische Darstellung eines erfindungsgemäßen BLDC- bzw. EC-Motors mit einer Schwungscheibe in einem zweiten Ausführungsbeispiel und
- Fig. 4:: eine schematische Darstellung eines erfindungsgemäßen BLDC- bzw. EC-Motors mit einer Schwungscheibe in einem dritten Ausführungsbeispiel.

### Beschreibung der Ausführungsbeispiele

Fig. 1 zeigt beispielhaft ein als Handwerkzeugmaschine 10 ausgebildetes elektrisches Bearbeitungsgerät mit einem elektronisch kommutierten Gleichstrommotor 12. Die Handwerkzeugmaschine 10 weist illustrativ ein Gehäuse 14 mit einem Handgriff 16 sowie eine Werkzeugaufnahme 18 auf und ist beispielhaft zur netzunabhängigen Stromversorgung mechanisch und elektrisch mit einem Akkupack 20 verbindbar. Im vorliegenden Beispiel besitzt der Akkupack 20 eine Versorgungsspannung von 10,8 V. Die Erfindung kann aber ohne Einschränkung auch auf elektrische Bearbeitungsgeräte mit Akkupacks anderer Spannungs- und Leistungsklassen angewendet werden.

Die Handwerkzeugmaschine 10 ist hier beispielhaft als ein Akku-Drehschlagschrauber ausgebildet. Es wird jedoch darauf hingewiesen, dass die vorliegende Erfindung weder auf Akku-Drehschlagschrauber noch auf Handwerkzeugmaschinen im Allgemeinen beschränkt ist, sondern vielmehr bei unterschiedlichen elektrischen Bearbeitungsgeräten Anwendung finden kann, bei denen ein BLDC- oder EC-Motor 12 zum Einsatz kommt, z.B. bei Hand- oder Standbohrmaschinen, Schrauber, Schlagbohrmaschinen, Hobel, Winkelschleifer, Schwingschleifer, Poliermaschinen oder dergleichen, aber auch bei Motor getriebenen Gartengeräten, wie Rasenmäher, Rasentrimmer, Astsägen oder dergleichen, oder Haushaltgeräten, wie Staubsauger, Mixer, etc., unabhängig davon, ob das elektrische Bearbeitungsgerät netzunabhängig mit dem Akkupack 20 oder netzabhängig betreibbar ist.

In dem Gehäuse 14 sind exemplarisch der von dem Akkupack 20 mit Strom versorgte BLDC-Motor 12, ein Getriebe 22 und ein Schlagwerk 24 angeordnet. Der Motor 12 ist gemäß einer Ausführungsform nach Art eines Scheibenmotors ausgebildet und z.B. über einen Handschalter 26 betätigbar, d.h. ein- und ausschaltbar. Im Folgenden wird der Einfachheit halber gelegentlich von einem Motor gesprochen, auch wenn hiermit stets ein BLDC- bzw. EC-Motor gemeint ist. Vorzugsweise ist der Motor 12 derart elektronisch steuer- bzw. regelbar, dass sowohl ein Reversierbetrieb, als auch Vorgaben hinsichtlich einer gewünschten Drehgeschwindigkeit und/oder eines Drehmomentes realisierbar sind. Die Funktionsweise und der Aufbau des Motors 12 ist dem Fachmann allgemein bekannt und soll daher nicht weiter Gegenstand der Beschreibung sein.

Illustrativ ist der Motor 12 über eine zugeordnete Motorwelle 28 mit dem Getriebe 22 verbunden, das eine Drehung der Motorwelle 28 in eine Drehung eines zwischen Getriebe 22 und Schlagwerk 24 vorgesehenen Antriebsglieds 30, z.B. einer Antriebswelle, umwandelt. Diese Umwandlung erfolgt bevorzugt derart, dass das Antriebsglied 30 sich relativ zur Motorwelle 28 mit vergrößertem Drehmoment, aber verringerter Drehgeschwindigkeit dreht. Der Motor 20 und das Getriebe 22 sind beispielhaft in dem Gehäuse 14 angeordnet, können alternativ hierzu jedoch auch in einem diesen zugeordneten Gehäuse oder separaten Motor- und Getriebegehäusen angeordnet sein, die ihrerseits wiederum im Gehäuse 14 angeordnet sind.

Das mit dem Antriebsglied 30 verbundene Schlagwerk 24 ist beispielhaft ein Dreh- bzw. Rotationsschlagwerk, das schlagartige Drehimpulse mit hoher Intensität erzeugt und auf eine Abtriebswelle 32, z.B. eine Abtriebsspindel, überträgt. An der Abtriebswelle 32 ist die Werkzeugaufnahme 18 vorgesehen, die bevorzugt zur Aufnahme von Einsatzwerkzeugen ausgebildet ist und gemäß einer Ausführungsform sowohl mit einem Einsatzwerkzeug mit Außenkupplung, z.B. einem Schrauberbit, als auch mit einem Einsatzwerkzeug mit Innenkupplung, z.B. einem Steckschlüssel, verbindbar ist. Illustrativ ist die Werkzeugaufnahme 18 mit einem Einsatzwerkzeug 34 mit einer Außenmehrkant-Kupplung 36 oder mit einem Einsatzwerkzeug mit einer Innenmehrkant-Kupplung verbindbar. Das Einsatzwerkzeug 34 ist beispielhaft als Schrauberbit mit der illustrativ als Sechskant-Kupplung ausgeführten Außenmehrkant-Kupplung 36 ausgebildet, die in der Werkzeugaufnahme 18 angeordnet ist. Ein derartiges Schrauberbit ist hinreichend aus dem Stand der Technik bekannt, sodass hier zwecks Knappheit der Beschreibung auf eine eingehende Beschreibung verzichtet wird.

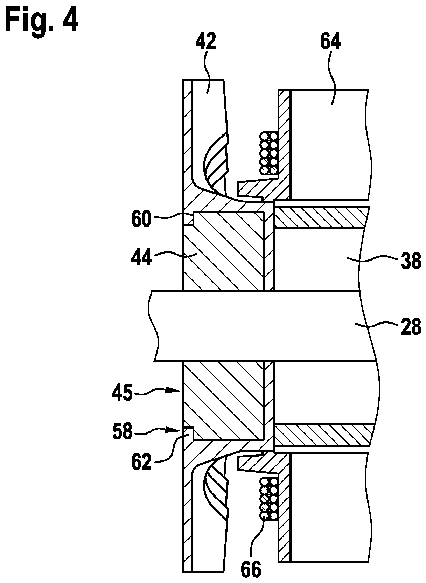

Figur 2 zeigt den gemäß einer ersten Ausführungsform ausgebildeten Motor 12, wobei der die Antriebswicklungen aufweisende Stator nicht dargestellt ist (vergleiche hierzu Figur 4). Der bürstenlose Gleichstrommotor 12 weist einen auf der Motorwelle 28 drehfest montierten Rotor 38 auf, der konstruktionsbedingt gegenüber bürstenbehafteten Gleichstrommotoren ein verhältnismäßig geringes Massenträgheitsmoment besitzt. Dies ist zum einen dadurch begründet, dass der Rotor 38 keine Wicklungen tragen muss, und zum anderen, weil er im Vergleich zum Rotor eines bürstenbehafteten Gleichstrommotors einen deutlich geringeren Durchmesser aufweisen kann. Somit ergibt sich das Problem, dass gewisse mit dem elektrischen Bearbeitungsgerät durchzuführende Bearbeitungsvorgänge in Verbindung mit einem BLDC-Motor aufgrund der verhältnismäßig geringen gespeicherten Rotationsenergie nicht mehr so effizient und gleichmäßig ausgeführt werden können.

Die Motorwelle 28 ist über zwei Kugellager 40 im Gehäuse 14 der Handwerkzeugmaschine 10 drehbar gelagert. Statt der Kugellager 40 können ohne Einschränkung der Erfindung auch andere Arten von Lagern, wie z.B. Wälz- oder Gleitlager zum Einsatz kommen. Zur Kühlung des Motors 12 und ggf. einer diesen ansteuernden Leistungselektronik (nicht gezeigt) ist drehfest auf der Motorwelle 28 ein Lüfter 40 angeordnet. Dieser wird in der Regel als Kunststoffspritzteil hergestellt. Im gezeigten Ausführungsbeispiel trägt das Kunststoffspritzteil 40 den Rotor 38 über dessen vollständige Länge. Es ist aber auch möglich, dass der Lüfter 40 als vom Rotor 38 getrenntes Spritzteil ausgebildet ist.

Erfindungsgemäß ist drehfest auf der Motorwelle 28 eine Schwungscheibe 44 angeordnet, die axial entlang der Motorwelle 28 zumindest teilweise von dem Lüfter 42 umschlossen ist. Dies ermöglicht eine besonders kurze Bauform des BLDC-Motors 12 in Verbindung mit einem hohen Maximalmoment. Zudem ist die Lösung im Betrieb sehr robust und zuverlässig. Der Lüfter 42 umschließt die Schwungscheibe 44 in radialer Richtung 46 der Motorwelle 28 vollständig, um eine besonders gute form- und/oder stoffschlüssige Verbindung zwischen dem Lüfter 42 und der Schwungscheibe 44 zu erreichen und axiale Überstände der Schwungscheibe 44 gegenüber dem Lüfter 12 zu vermeiden.

Die Schwungscheibe 44 weist eine sehr hohe Massenträgheit, eine sehr hohe Wellenpressung und eine sehr hohe homogene Dichte auf. Dazu ist die Schwungscheibe 44 bevorzugt einstückig aus Messing oder aus Eisen gefertigt. Messing ist als Material besonders gut geeignet, da seine Dichte von typ. 8.5 g/cm³ eine sehr hohe Massenträgheit bei kleiner Baugröße bewirkt und das Elastizitätsmodul von Messing von bis zu 120 GPa eine sehr hohe Wellenpressung erlaubt. Somit kann wirkungsvoll ein potentielles Durchdrehen der Schwungscheibe 44 auf der Motorwelle 28 im Betrieb vermieden werden. Durch die hohe homogene Dichte von Messing kann die Schwungscheibe 44 ohne einen aufwändigen und teuren Wuchtprozess direkt verbaut werden. Der Baueinheit aus Rotor 38, Lüfter 42 und Schwungscheibe 44 kann somit den Anforderungen an die maximal zulässige Rotorunwucht ohne zusätzliche Bearbeitungsprozesse gerecht werden. Statt Messing oder Eisen ist es auch denkbar, die Schwungscheibe 44 aus Keramik, Kunststein oder anderen Materialien, insbesondere Kunststoffen, herzustellen, die vergleichbare Eigenschaften aufweisen.

Die Schwungscheibe 44 geht zumindest einseitig an ihrem axialen Ende 45 in radialer Richtung 46 der Motorwelle 28 bündig in den Lüfter 42 über, um z.B. ungünstige Geräusche, die beim Betrieb des Motors 12 bzw. des elektrischen Bearbeitungsgeräts 10 entstehen könnten, wirksam zu vermeiden. Um ein einfaches und kostengünstiges Umspritzen der Schwungscheibe 44 mit dem Lüfter 42 bei gleichzeitig gutem Form- und/oder Stoffschluss zu realisieren, entspricht eine äußere Kontur 48 der Schwungscheibe 44 in radialer Richtung 46 der Motorwelle 28 über mindestens 50 % der axialen Erstreckung 50 der Schwungscheibe 44 im Wesentlichen einer äußeren Kontur 52 des Lüfters 42. Zudem läuft die Schwungscheibe 44 über mindestens 50 % ihrer axialen Erstreckung 50 entlang der Motorwelle 28 verjüngend, insbesondre konisch, zu, um einerseits ein einfacheres Umspritzen der Schwungscheibe 44 von einer Seite, andererseits aber auch ein einfacheres Aufschieben des Lüfters42 auf die Schwungscheibe 44 bzw. ein einfacheres Einschieben der Schwungscheibe 44 in den Lüfter 42 zu ermöglichen. Unterstützt werden kann dies dadurch, dass die Schwungscheibe zumindest einseitig an ihrem axialen Ende 45 eine konvexe Form aufweist. Dadurch ist ergänzend sichergestellt, dass die Schwungscheibe 44 den Luftstrom des Lüfters 42 nicht negativ beeinflusst.

Die Verbindung zwischen Rotor 38, Schwungscheibe 44, Lüfter 42 und Motorwelle 28 kann auf verschiedene Weisen hergestellt werden. So ist es möglich, zunächst die Schwungscheibe 44 mit einem Lüfter 42 zu umspritzen, um dieses Bauteil anschließend auf die Motorwelle 28 des bürstenlosen Gleichstrommotors 12 zu pressen. Alternativ kann auch der Rotor 38 mit dem Lüfter 42 umspritzt werden, um anschließend die Schwungscheibe 44 in den Lüfter 42 einzuschieben und mit der Motorwelle 28 zu verpressen. Weiterhin ist es denkbar, den Lüfter 42, die Schwungscheibe 44 und den Rotor 38 als Einzelteile herzustellen, um diese dann einzeln auf die Motorwelle 28 zu pressen. Dabei kann die Schwungscheibe 44 wahlweise in den Lüfter 42 eingeschoben oder der Lüfter 42 auf die Schwungscheibe 44 aufgeschoben werden.

Die Figuren 3 und 4 zeigen jeweils eine schematische Darstellung eines zweiten und dritten Ausführungsbeispiels der Schwungscheibe 44 des erfindungsgemäßen BLDC- bzw. EC-Motors 12. In Figur 3 verjüngt sich die Schwungscheibe 44 im Unterschied zu Figur 2 nicht konisch, sondern über ca. 50 % seiner axialen Erstreckung 50 entlang der Motorwelle 28 nichtlinear mit einem Radius 54, um dann über die restlichen 30 % leicht konisch in Richtung des Rotors (nicht gezeigt) auszulaufen. In Figur 4 weist die Schwungscheibe 44 an einem axialen Ende 45 eine an ihrem radial äußeren Umfang 58 umlaufende Nut 60 auf, in die ein radial nach innen vorstehender Kragen 62 des Lüfters 42 eingreift. Auf diese Weise hat der Lüfter 42 einen sicheren axialen Sitz auf der Schwungscheibe 44. Zudem kann die Montage erleichtert werden, da der Lüfter 42 als fertiges Spritzteil nur auf die bereits auf die Motorwelle 28 gepresste Schwungscheibe 44 aufgeschoben werden muss, um anschließend den Rotor 38 auf die Motorwelle 28 zu pressen. In Figur 4 ist zudem der in den Figuren 2 und 3 nicht dargestellte Stator 64 mit seinen Antriebswicklungen 66 zu erkennen.

Es sei abschließend noch darauf hingewiesen, dass die gezeigten Ausführungsbeispiele weder auf die in den Figuren 1 bis 4 dargestellten Größenverhältnisse zwischen Stator und Schwungscheibe bzw. Lüfter noch auf die Anordnung und Anzahl der Lagerstellen der Motorwelle, der Antriebswicklungen bzw. sonstiger die Erfindung nicht unmittelbar betreffender Merkmale beschränkt ist.

## Patentansprüche

1. Bürstenloser Gleichstrommotor (12) eines elektrischen Bearbeitungsgeräts (10), mit einem Stator (64), einem Rotor (38), einem Lüfter (42) und einer Schwungscheibe (44), wobei der Rotor (38), der Lüfter (42) und die Schwungscheibe (44) drehfest auf einer Motorwelle (28) des bürstenlosen Gleichstrommotors (12) angeordnet sind und wobei die Schwungscheibe (44) axial entlang der Motorwelle (28) zumindest teilweise von dem Lüfter (42) umschlossen ist, wobei die Schwungscheibe (44) an einem axialen Ende (45) eine an ihrem radial äußeren Umfang (58) umlaufende Nut (60) aufweist, in die ein radial nach innen vorstehender Kragen (62) des Lüfters (42) eingreift.

2. Bürstenloser Gleichstrommotor (12) nach Anspruch 1, **dadurch gekennzeichnet, dass** die Schwungscheibe (44) eine sehr hohe Massenträgheit, eine sehr hohe Wellenpressung und eine sehr hohe homogene Dichte aufweist.

3. Bürstenloser Gleichstrommotor (12) nach einem der vorhergehenden Ansprüche, **dadurch gekennzeichnet, dass** die Schwungscheibe (44) einstückig aus Messing oder aus Eisen besteht.

4. Bürstenloser Gleichstrommotor (12) nach einem der vorhergehenden Ansprüche, **dadurch gekennzeichnet, dass** die Schwungscheibe (44) zumindest einseitig (45) in radialer Richtung (46) der Motorwelle (28) bündig in den Lüfter (42) übergeht.

5. Bürstenloser Gleichstrommotor (12) nach einem der vorhergehenden Ansprüche, **dadurch gekennzeichnet, dass** in radialer Richtung (46) der Motorwelle (28) eine äußere Kontur (48) der Schwungscheibe (44) über mindestens 50 % ihrer axialen Erstreckung (50) entlang der Motorwelle (28) im Wesentlichen einer äußeren Kontur (52) des Lüfters (42) entspricht.

6. Bürstenloser Gleichstrommotor (12) nach einem der vorhergehenden Ansprüche, **dadurch gekennzeichnet, dass** die Schwungscheibe (44) über mindestens 50 % ihrer axialen Erstreckung (50) entlang der Motorwelle (28) verjüngend, insbesondre konisch, zuläuft.

7. Bürstenloser Gleichstrommotor (12) nach einem der vorhergehenden Ansprüche, **dadurch gekennzeichnet, dass** die Schwungscheibe (44) zumindest einseitig (45) eine konvexe Form aufweist.

8. Handwerkzeugmaschine (10) mit einem bürstenlosen Gleichstrommotor (12) und einer Schwungscheibe (44) nach einem der vorhergehenden Ansprüche.

## Claims

1. Brushless DC motor (12) of an electric machining device (10), having a stator (64), a rotor (38), a fan (42) and a flywheel (44), wherein the rotor (38), the fan (42) and the flywheel (44) are arranged for conjoint rotation on a motor shaft (28) of the brushless DC motor (12), and wherein the flywheel (44) is enclosed at least partially by the fan (42) axially along the motor shaft (28), wherein the flywheel (44) has, at one axial end (45), a groove (60) extending around its radially outer periphery (58), in which a radially inwardly protruding collar (62) of the fan (42) engages.

2. Brushless DC motor (12) according to Claim 1, **characterized in that** the flywheel (44) has very high inertia, a very high shaft pressure and a very high homogeneous density.

3. Brushless DC motor (12) according to either of the preceding claims, **characterized in that** the flywheel (44) consists integrally of brass or of iron.

4. Brushless DC motor (12) according to one of the preceding claims, **characterized in that** the flywheel (44) transitions into the fan (42) in a flush manner at least on one side (45) in the radial direction (46) of the motor shaft (28).

5. Brushless DC motor (12) according to one of the preceding claims, **characterized in that**, in the radial direction (46) of the motor shaft (28), an external contour (48) of the flywheel (44), along at least 50% of its axial extent (50) along the motor shaft (28), corresponds substantially to an external contour (52) of the fan (42).

6. Brushless DC motor (12) according to one of the preceding claims, **characterized in that** the flywheel (44) tapers, in particular in a conical manner, along at least 50% of its axial extent (50) along the motor shaft (28).

7. Brushless DC motor (12) according to one of the preceding claims, **characterized in that** the flywheel (44) has a convex shape at least on one side (45).

8. Hand-held power tool (10) having a brushless DC motor (12) and a flywheel (44) according to one of the preceding claims.

## Revendications

1. Moteur à courant continu sans balais (12) d'un appareil d'usinage électrique (10), avec un stator (64), un rotor (38), un ventilateur (42) et un volant d'inertie (44), le rotor (38), le ventilateur (42) et le volant d'inertie (44) étant agencés de manière solidaire en rotation sur un arbre de moteur (28) du moteur à courant continu sans balais (12) et le volant d'inertie (44) étant entouré axialement le long de l'arbre de moteur (28) au moins partiellement par le ventilateur (42), le volant d'inertie (44) présentant à une extrémité axiale (45) une rainure (60) périphérique sur sa circonférence radialement extérieure (58), dans laquelle s'engage une collerette (62) du ventilateur (42) faisant saillie radialement vers l'intérieur.

2. Moteur à courant continu sans balais (12) selon la revendication 1, **caractérisé en ce que** le volant d'inertie (44) présente une inertie de masse très élevée, une pression d'arbre très élevée et une densité homogène très élevée.

3. Moteur à courant continu sans balais (12) selon l'une quelconque des revendications précédentes, **caractérisé en ce que** le volant d'inertie (44) est réalisé d'une seule pièce en laiton ou en fer.

4. Moteur à courant continu sans balais (12) selon l'une quelconque des revendications précédentes, **caractérisé en ce que** le volant d'inertie (44) se prolonge au moins d'un côté (45) dans la direction radiale (46) de l'arbre de moteur (28) en affleurement dans le ventilateur (42).

5. Moteur à courant continu sans balais (12) selon l'une quelconque des revendications précédentes, **caractérisé en ce que**, dans la direction radiale (46) de l'arbre de moteur (28), un contour extérieur (48) du volant d'inertie (44) correspond essentiellement à un contour extérieur (52) du ventilateur (42) sur au moins 50 % de son étendue axiale (50) le long de l'arbre de moteur (28).

6. Moteur à courant continu sans balais (12) selon l'une quelconque des revendications précédentes, **caractérisé en ce que** le volant d'inertie (44) se rétrécit, en particulier de manière conique, sur au moins 50 % de son étendue axiale (50) le long de l'arbre de moteur (28).

7. Moteur à courant continu sans balais (12) selon l'une quelconque des revendications précédentes, **caractérisé en ce que** le volant d'inertie (44) présente une forme convexe au moins d'un côté (45).

8. Machine-outil portative (10) avec un moteur à courant continu sans balais (12) et un volant d'inertie (44) selon l'une quelconque des revendications précédentes.
